# EUROPÄISCHE PATENTSCHRIFT

(11) **EP 1 238 835 B1**
(45) Veröffentlichungstag und Bekanntmachung des Hinweises auf die Patenterteilung: **30.01.2008**
(21) Anmeldenummer: 02002835.3
(22) Anmeldetag: 08.02.2002
(51) Int. Cl.: B60H 1/00

(54) **Klimagerät**
Air conditioning
Climatiseur

(30) Priorität: 07.03.2001 DE 10110956
(43) Veröffentlichungstag der Anmeldung: 11.09.2002
(73) Patentinhaber: Behr GmbH & Co. KG, 70469 Stuttgart (DE)
(72) Erfinder: Klingler, Dietrich, Dipl.-Ing., 73540 Heubach (DE); Schwahn, Werner, 71701 Schwieberdingen (DE); Voigt, Klaus, Dipl.-Ing., 74321 Bietigheim-Bissingen (DE)
(74) Vertreter: Grauel, Andreas

(56) Entgegenhaltungen:
- DE-A- 3 710 752
- DE-C- 19 505 213
- DE-C- 19 951 101

## Beschreibung

Die Erfindung betrifft ein Klimagerät, insbesondere für ein Kraftfahrzeug und betrifft weiterhin ein Wärmeabschirmelement, insbesondere gemäß dem Oberbegriff des Anspruchs 1, sowie ein Wärmeabschirmelement gemäß dem Oberbegriff des Anspruchs 8.

Der Erfindung liegt das Problem zugrunde, daß bei hohen Kühlanforderungen an das Klimagerät, beispielsweise bei Fahrten im Hochsommer, die durch den Kühlwärmetauscher abgekühlte Luft durch den heißen Heizkörper nicht wieder oder nur geringfügig erwärmt werden soll, wenn die kalte Luft an dem Heizkörper vorbei strömt. Dieses Problem tritt insbesondere bei luftseitig geregelten Klimaanlagen auf, bei denen der Heizkörper permanent von dem heißen Kühlwasser durchströmt wird.

Zur Lösung dieses Problems ist in dem japanischen Gebrauchsmuster JP 58-136813 vorgeschlagen, vor und hinter dem Heizkörper Klappen vorzusehen, so daß der Heizkörper durch die Klappen abgeschirmt ist. Diese Lösung ist jedoch kostenaufwendig, da zum einen eine Vielzahl von Luftklappen angeordnet und zum anderen der Bauraum erhöht ist.

Aus der DE 197 50 381 ist ein Klimagerät gemäß dem Oberbegriff des Anspruchs 1 bekannt, bei der zur Lösung dieses Problems der Heizkörper in einem bestimmten Winkel leicht gekippt angeordnet ist, so daß die heiße Luft so aufsteigt, daß sie mit der abgekühlten Luft nur in beschränktem Maß vermischt wird. Zusätzlich ist oberhalb des Heizkörpers eine kleine Abschirmplatte angeordnet, so daß die heiße Luft nicht in den Raum oberhalb des Heizkörpers, in dem die kalte Luft an dem Heizkörper vorbeigeführt wird, aufsteigen kann. Dieses Klimagerät hat den Nachteil, daß die Abschirmwirkung gegenüber der Kaltluft nur unzureichend ist und durch das oberhalb des Heizkörpers angeordneten Abschirmelement die Luftströmung der insbesondere aus der unteren Hälfte des Kühlwärmetauschers austretenden Kaltluftstrom stark behindert wird.

Ausgehend von diesem Stand der Technik ist es Aufgabe der Erfindung, ein verbessertes Klimagerät bereitzustellen, mit der die vorgenannten Nachteile vermieden werden können.

Diese Aufgabe wird gelöst durch ein Klimagerät mit den Merkmalen des Anspruchs 1. Weiterhin wird die Aufgabe mit den Merkmalen des Anspruchs 7 gelöst.

Wenn erfindungsgemäß an einer Luftanströmseite und/oder an einer Luftabströmseite des Heizkörpers ein Wärmeabschirmelement angeordnet ist, kann die Aufwärmung der Kaltluft wirksam verhindert werden, wobei das Klimagerät kostengünstig herstellbar ist, denn das zusätzlich anzuordnende Wärmeabschirmelement kann äußerst kostengünstig ausgebildet sein. Das Wärmeabschirmelement erstreckt sich vorzugsweise flächig an der Luftanströmseite und/oder Luftausströmseite des Heizkörpers, wodurch eine Reduzierung des Bauraumes möglich ist.

Das Wärmeabschirmelement ist zellenartig aufgebaut, wobei Zellwände Strömungsöffnungen einschließen. Dadurch ist in Durchströmungsrichtung des Heizkörpers dem Luftstrom, der in den Heizkörper eintritt und/oder aus dem Heizkörper austritt, durch das Wärmeabschirmelement nur ein geringer Widerstand entgegengesetzt, so daß durch das Wärmeabschirmelement nur ein vernachlässigbarer Druckabfall auftritt. Gleichzeitig wird durch das Wärmeabschirmelement eine bessere Beaufschlagung, also eine gleichmäßigere Anströmung bzw.

Ausströmung, des Heizkörpers mit Luft erreicht. Die auf der Luftanströmseite bzw. in der Nähe der Luftabströmseite des Heizkörpers vorbeiströmende Kaltluft wird im Kühlbetrieb der Klimaanlage dennoch wirksam von dem Heizkörper ferngehalten und somit eine Aufwärmung dieser Luft verhindert.

In Weiterbildung der Erfindung sind die Durchströmungsöffnungen vorzugsweise zellenartig oder wabenartig ausgebildet. Die zellenartigen Öffnungen weisen einen runden oder eckigen, vorzugsweise viereckigen, rechteckigen, quadratischen oder sechseckigen Querschnitt auf. Die wabenartigen Öffnungen weisen einen sechseckigen Querschnitt auf.

Indem die Querschnittsflächen der einzelnen Flächen/Zellen unterschiedlich groß sein können, kann die Abschirmwirkung des Wärmeabschirmelementes bereichsweise unterschiedlich ausgebildet sein. Wenn die Querschnittsfläche kleiner ist, wird die Abschirmwirkung größer sein und umgekehrt.

Vorzugsweise kann die tiefe des Wärmeabschirmelementes auch variieren.

In Weiterbildung der Erfindung beträgt die Höhe der Zellwände vorzugsweise zwischen 6 und 10 mm, was einen optimalen Kompromiß zwischen benötigtem Bauraum und Abschirmwirkung ergibt, denn je höher die Zellwände desto größer wird die Abschirmwirkung sein, wobei auch der Bauraum zunimmt.

Bevorzugt wird das Wärmeabschirmelement die Luftanströmseite oder die Luftsausströmseite des Heizkörpers vollständig abdecken.

Für eine kostengünstige Herstellung des Klimagerätes ist es vorteilhaft, wenn das Wärmeabschirmelement an den Heizkörper wieder lösbar befestigbar ist, somit beispielsweise aufsteckbar oder anklippsbar ist. Beispielsweise kann das Wärmeabschirmelement vor Einsetzen des Heizkörpers auf diesen gesteckt oder aufgeklipst werden, wodurch kaum Mehraufwand bei der Herstellung des Klimagerätes entsteht.

Bevorzugte Ausgestaltungen sind durch die Merkmale der Unteransprüche beschrieben.

Im Folgenden wird die Erfindung anhand eines Ausführungsbeispiels unter Bezugnahme auf die Zeichnung im einzelnen erläutert. In der Zeichnung zeigen:
- Fig. 1: einen Querschnitt eines Klimagerätes,
- Fig. 1a: eine Anordnung eines Wärmeabschirmelementes,
- Fig. 2: eine Ansicht eines Wärmeabschirmelementes,
- Fig. 2a: ein Ausschnitt eines Wärmeabschirmelements,
- Fig. 2b: ein Ausschnitt eines Wärmeabschirmelements,
- Fig. 3: einen Querschnitt eines Klimagerätes,
- Fig. 4a: ein Schnitt eines Wärmeabschirmelements,
- Fig. 4b: ein Schnitt eines Wärmeabschirmelements,
- Fig. 4c: ein Schnitt eines Wärmeabschirmelements,
- Fig. 5a: ein Schnitt eines Wärmeabschirmelements,
- Fig. 5b: ein Ausschnitt eines Wärmeabschirmelements,
- Fig. 5c: ein Ausschnitt eines Wärmeabschirmelements,
- Fig. 5d: ein Ausschnitt eines Wärmeabschirmelements.

Ein Klimagerät 10 weist ein Luftführungsgehäuse 12 auf, in dem ein Gebläse 14, ein Luftfilter 16, ein Kühlwärmetauscher 18, wie beispielsweise ein Verdampfer, und ein Heizkörper 20 zur Förderung und Konditionierung der Luft angeordnet sind.

Die Luft wird über das Gebläse 14 angesaugt und in Richtung des Luftfilters 16 abgegeben. Die gefilterte Luft wird in dem Kühlwärmetauscher 18, der beispielsweise ein Verdampfer eines nicht dargestellten Kältemittelkreises sein kann, abgekühlt. Vom Verdampfer 18, tritt die abgekühlte Luft in einen Kaltluftbereich 22 ein. Im Verdampfer 18 eventuell entstehendes Kondenswasser kann über einen Ablaufkanal 24 aus dem Luftführungsgehäuse 12 ablaufen. Die Kaltluft kann entweder durch den Heizkörper 20 geführt und dort erwärmt werden und vom Heizkörper 20 aus in einen Luftmischraum 25 eintreten oder über einen Kaltluftbypass 26, der mit einer Bypassklappe 28 verschließbar ist, an dem Heizkörper 20 vorbeigeführt und in den Luftmischraum 25 eintreten. Stromabseitig des Heizkörpers 20 ist eine Warmluftklappe 30 angeordnet, mit der der Warmluftstrom gesperrt werden kann. Vom Luftmischraum 25 zweigen ein Defrostluftkanal 32, der mit einer Defrostluftklappe 34 verschließbar ist und ein Belüftungskanal 36, der mit einer Belüftungsklappe 38 verschließbar ist, ab. Des weiteren zweigt von dem Luftmischraum 25 ein Fußraumluftkanal 40 ab, der über eine nicht dargestellte Klappe ebenfalls verschließbar sein kann.

In dem dargestellten Ausführungsbeispiel sind der Kühlwärmetauscher 18 und der Heizkörper 20 parallel zueinander eng benachbart angeordnet. Im maximalen Kühlbetrieb, wenn die Warmluftklappe 30 geschlossen ist, wird die gesamte Luft ausschließlich vom Kaltluftraum 22 durch den Kaltluftbypass 26 geführt, wobei sie parallel zum Heizkörper 20 in Richtung Bypasskanal 26 strömt. Damit die Kaltluft beim Vorbeiströmen an dem Heizkörper 20 nicht erwärmt wird, ist erfindungsgemäß an einer Luftanströmseite 42 des Heizkörpers 20 ein Wärmeabschirmelement 44 angeordnet, an dessen Kaltluftseite 46 Kaltluft vorbeiströmen kann und dessen Warmluftleite 48 dem Heizkörper 20 eng benachbart oder sogar auf der Luftanströmseite 42 unmittelbar aufliegt. Dabei ist das Wärmeabschirmelement 44 von einer Aufnahme 60 aufgenommen, die vorzugsweise auch den Heizkörper aufnimmt. In einem anderen Ausführungsbeispiel ist das Wärmeabschirmelement auf dem Heizkörper befestigt, wie beispielsweise aufgesteckt, aufgeklippst oder aufgeklebt und der Heizkörper ist von der Aufnehme aufgenommen.

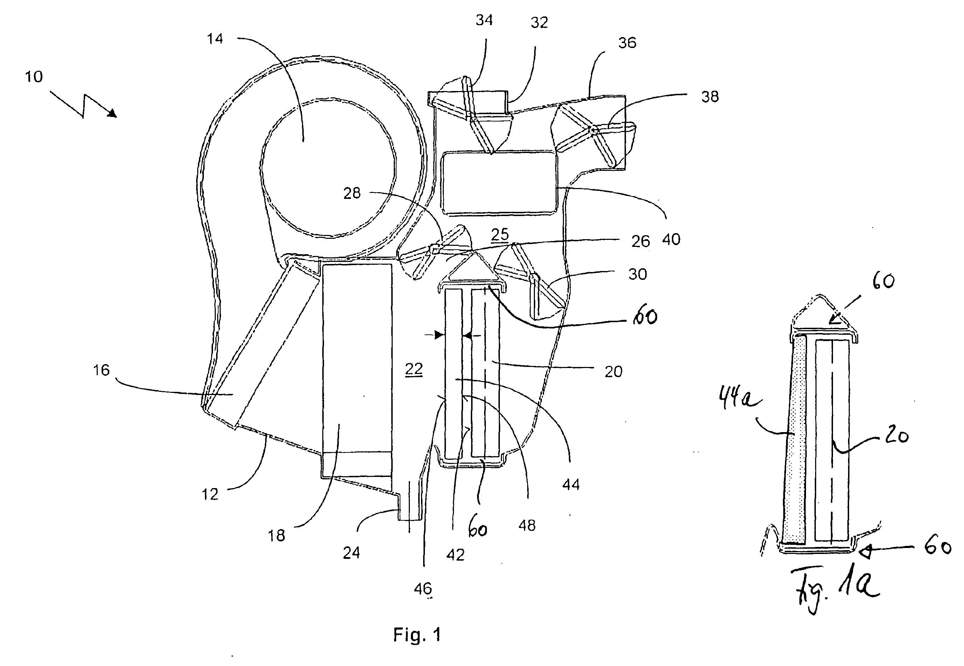

Gemäß Figur 1 ist das Wärmeabschirmelement 44 derart aufgebaut, daß es Öffnungen aufweist und über seine gesamte Fläche im wesentlichen die gleiche Tiefe aufweist. In Figur 1a ist ein weiteres Ausführungsbeispiel dargestellt, wobei das Luftstromsteuerelement oder Wärmeabschirmelement 44a über seine Höhe betrachtet eine veränderliche Tiefe in Luftströmungsrichtung durch die Öffnungen aufweist. Somit sind die Öffnungen oder Durchlässe durch das Wärmeabschirmelement unterschiedlich tief ausgebildet. Im unteren Bereich ist die Tiefe größer als im oberen Bereich. Die Tiefe variiert somit mit der Richtung der an dem Element vorbei strömenden Luft. Das Luftstromsteuerelement ist somit im wesentlichen keilförmig ausgebildet. Gemäß eines weiteren erfinderischen Gedankens kann bei einem weiteren Ausführungsbeispiel die Tiefe auch in der Höhe variieren, wobei der Teil mit der größeren Tiefe im unteren Teil des Elementes angeordnet ist. Auch kann der Bereich maximaler Tiefe derart ausgebildet sein, daß er nicht an einem Randbereich liegt sondern in einer mittleren Zone des Elementes, in Richtung der vorbeiströmenden Luftstroms betrachtet.

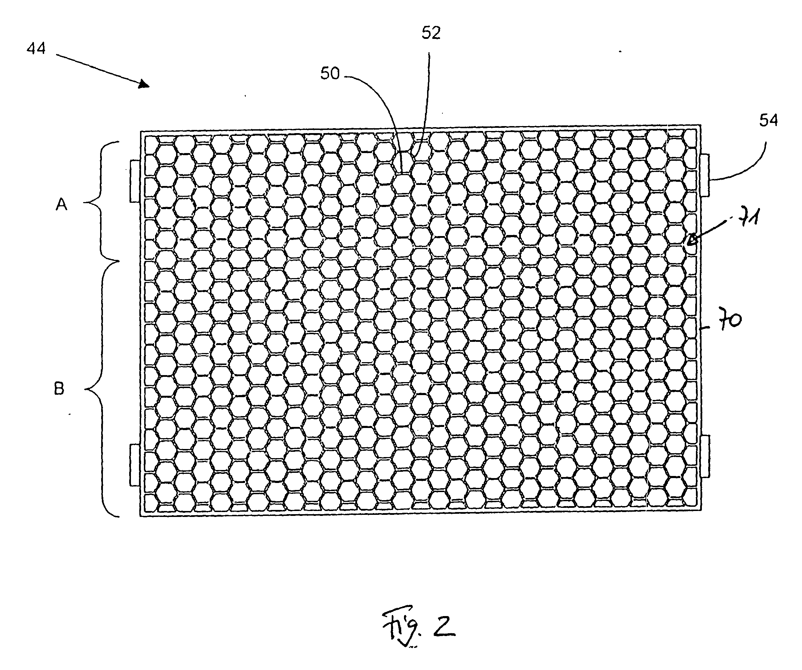

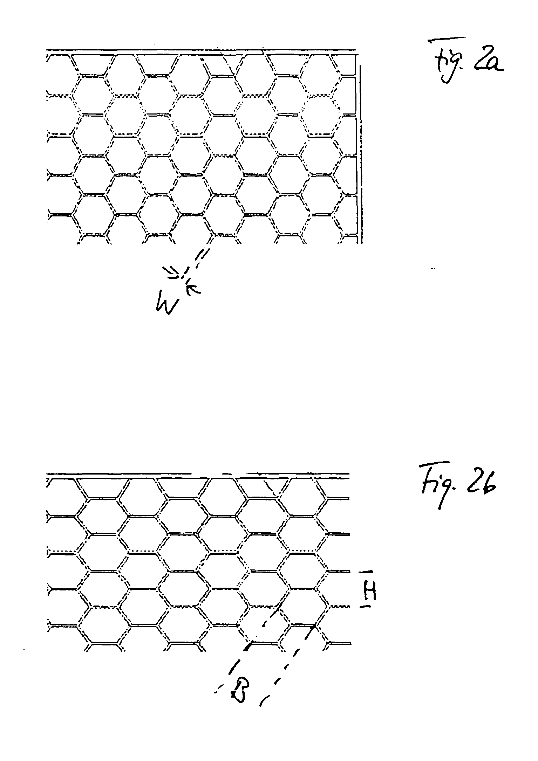

Das in Fig. 2 in einer Ansicht dargestellte Wärmeabschirmelement oder Luftstromsteuerelement 44 ist zellenartig aufgebaut, wobei Zellwände 50 Durchströmungsöffnungen 52 einschließen. Die Durchströmungsöffnungen 52 weisen einen sechseckigen Querschnitt auf, so daß das Wärmeabschirmelement 44 wabenartig aufgebaut ist. Selbstverständlich sind andere Geometrien, beispielsweise rund, viereckig und viele andere Geometrien, denkbar und möglich. Die Zellen können regelmäßig oder unregelmäßig oder symmetrisch oder unsymmetrisch ausgebildet und/oder angeordnet sein, wobei auch eine Mehrzahl von Geometrien regelmäßig oder unregelmäßig verteilt angeordnet sein können.

In dem dargestellten Ausführungsbeispiel sind sämtliche Durchströmungsöffnungen 52 identisch ausgebildet. Es ist aber auch denkbar, daß in verschiedenen Bereichen des Wärmeabschirmelementes 44, die Querschnittsflächen der Durchströmungsöffnungen unterschiedlich sein können. So könnten beispielsweise die Querschnittsflächen im oberen Bereich A des Wärmeabschirmelements 44 kleiner ausgebildet sein, um dort die Wärmeabschirmwirkung zu erhöhen, da im oberen Bereich mehr Kaltluft vorbeiströmt als im unteren Bereich B. Es kann jedoch auch zweckmäßig sein, wenn die Zellen mit verschiedenen Größen auf der gesamten Fläche verteilt sind, wie regelmäßig oder unregelmäßig verteilt. Dies kann in Abstimmung des Heizkörpers, seiner Ausbildung und Lage, ausgewählt werden. Das Wärmeabschirmelement weist einen zumindest teilweise umlaufenden Randbereich 70 auf, der mit dem Wabengitter 71 verbunden ist oder mit ihm einteilig ausgebildet ist. Vorzugsweise ist sowohl der Randbereich als auch das Zellen- bzw. Wabengitter aus Kunststoffmaterial, z.B. Polyamid, hergestellt. Dabei kann das gesamte Teil mit Randbereich und Wabengitter in einem Spritzgußverfahren herstellbar sein. Auch kann das Wabengitter aus einem anderen oder dem gleichen Material wie der Randbereich herstellbar und mit diesem zusammenfügbar sein.

Bevorzugt beträgt die Höhe der Zellwände, die der Breite D des Wärmeabschirmelements entspricht, zwischen 6 und 15 mm.

Das Wärmeabschirmlement 44 bedeckt vorzugsweise vollständig die Luftanströmseite 42 des Heizkörpers 20 und kann über schematisch dargestellte Klipse 54 an den Heizkörper 20 angeklipst werden.

Die Figuren 2a und 2b zeigen Ausschnitte des Zellengitters des Wärmeabschirmelementes 200, wobei in Figur 2a die Zellen gleichförmig und punktsymmetrisch sind und in Figur 2b sind die Zellen liniensymmetrisch., wobei die Höhe H der Zellen geringer ist als die Breite B.

Die Wandstärke W der Zellen ist im Bereich von ca. 0,5 mm, vorzugsweise zwischen 0,1 mm und 1 mm.

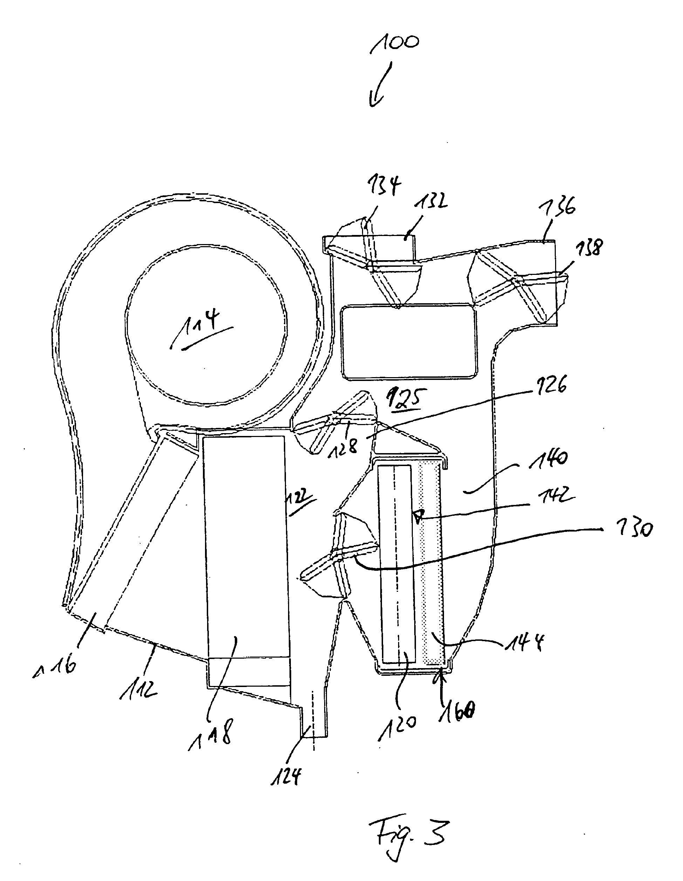

Die Figur 3 zeigt ein Klimagerät 100 mit einem Luftführungsgehäuse 112, in dem ein Gebläse 114, ein Luftfilter 116, ein Kühlwärmetauscher 118, wie beispielsweise ein Verdampfer, und ein Heizkörper 120 zur Förderung und Konditionierung der Luft angeordnet sind. Die Luft wird über das Gebläse 114 angesaugt und in Richtung des Luftfilters 116 abgegeben. Die gefilterte Luft wird in dem Kühlwärmetauscher 118, der beispielsweise ein Verdampfer eines nicht dargestellten Kältemittelkreises sein kann, abgekühlt. Vom Verdampfer 118, tritt die abgekühlte Luft in einen Kaltluftbereich 122 ein. Im Verdampfer 118 eventuell entstehendes Kondenswasser kann über einen Ablaufkanal 124 aus dem Luftführungsgehäuse 112 ablaufen. Die Kaltluft kann entweder durch den Heizkörper 120 geführt und dort erwärmt werden und vom Heizkörper 120 aus in einen Luftmischraum 125 eintreten oder über einen Kaltluftbypass 126, der mit einer Bypassklappe 128 verschließbar ist, an dem Heizkörper 120 vorbeigeführt und in den Luftmischraum 125 eintreten. Anströmseitig des Heizkörpers 120 ist eine Warmluftklappe 130 angeordnet, mit der der Luftstrom durch den Heizkörper gesperrt werden kann. Vom Luftmischraum 125 zweigen ein Defrostluftkanal 132, der mit einer Defrostluftklappe 134 verschließbar ist und ein Belüftungskanal 136, der mit einer Belüftungsklappe 138 verschließbar ist, ab. Des weiteren zweigt von dem Luftmischraum 125 ein Fußraumluftkanal 140 ab, der über eine nicht dargestellte Klappe ebenfalls verschließbar sein kann. In dem dargestellten Ausführungsbeispiel sind der Kühlwärmetauscher 118 und der Heizkörper 120 parallel zueinander eng benachbart angeordnet, wobei zwischen ihnen die Klappe 130 angeordnet ist. Im maximalen Kühlbetrieb, wenn die Warmluftklappe 130 geschlossen ist, wird die gesamte Luft ausschließlich vom Kaltluftraum 122 durch den Kaltluftbypass 126 geführt, wobei sie parallel zum Heizkörper 120 in Richtung Bypasskanal 126 strömt. Damit die Kaltluft beim Durchströmen des Bereichs 125 nicht erwärmt wird, ist erfindungsgemäß an einer Luftabströmseite 142 des Heizkörpers 120 ein Wärmeabschirmelement 144 angeordnet. Dabei ist das Wärmeabschirmelement 144 von einer Aufnahme 160 aufgenommen, die vorzugsweise auch den Heizkörper aufnimmt. In einem anderen Ausführungsbeispiel ist das Wärmeabschirmelement auf dem Heizkörper befestigt, wie beispielsweise aufgesteckt, angeklipst oder aufgeklebt und der Heizkörper ist von der Aufnehme aufgenommen.

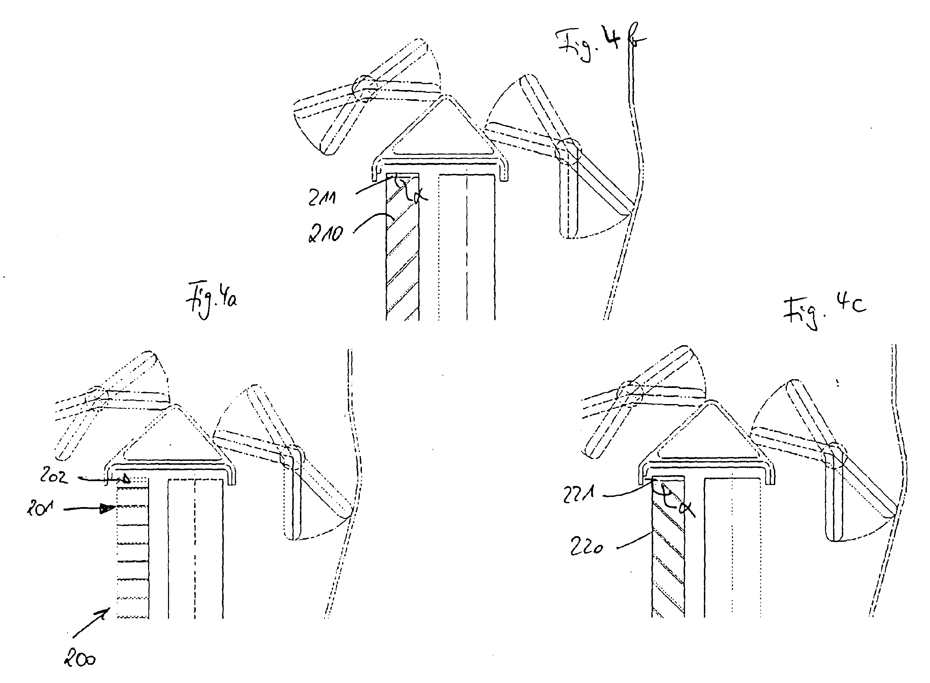

Die Figuren 4a bis 4cv zeigen Ausschnitte von Anordnungen von einem Wärmeabschirmelement, wobei in Figur 4a die Zellenwände 201 im wesentlichen horizontal bzw. parallel zur Wandung 202 des zumindest teilweise umlaufenden Rahmens ausgerichtet sind. In den Figuren 4b und 4c sind die Wandungen 210 und 220 derart ausgerichtet, daß ein Winkel zwischen Wandungen der Zellen und dem Rahmen 211 und 221 vorgesehen ist, so daß im Falle der Figur 4b der Winkel α kleiner als 90 ° ist und im Falle der Figur 4c der Winkel α größer als 90 ° ist.

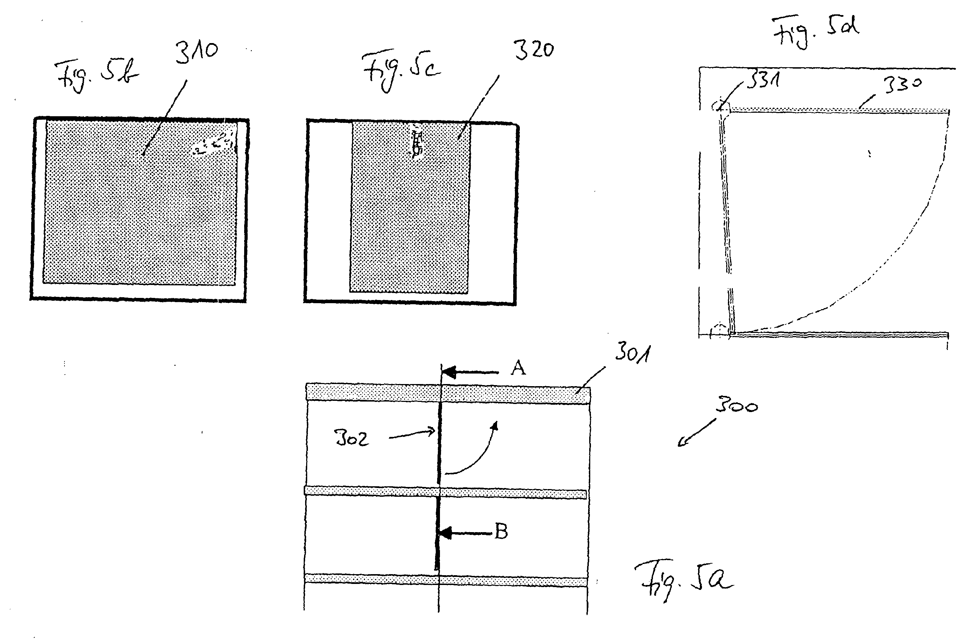

Weiterhin ist es zweckmäßig, wenn zumindest einzelne oder alle Zellen der Durchtrittskanäle des Wärmeabschirmelements Verschlußelemente aufweisen, die einen Luftstrom in eine Richtung durch das Element zumindest teilweise verhindern bzw. mindern. In den Figuren 5a bis 5d sind solche Verschlußelemente als Klappen oder Fasern dargestellt, die vorzugsweise in eine Richtung beweglich gehalten sind und einen Luftstrom zur Aufwärmung eines vorbeiströmenden Mediums verhindern. Diese Elemente können als Klappen eingesetzt sein oder angespritzt sein, wobei das Material der Klappenflügel aus anderem Material sein kann als das Material der Zellwände. Die Figur 5a zeigt einen Ausschnitt einer Anordnung eines Wärmeabschirmelementes 300, wobei eine Klappe 302 in einer Zelle angeordnet ist und sich gemäß dem Pfeil öffnen und schließen kann. Die Klappe ist an der Zellwand 302 befestigt oder an dieser angeordnet, wie auch ggfs. Einstückig ausgebildet. Die Figuren 5b und 5c zeigen schematisch Ausführungsbeispiele von Klappenflügeln 302, wobei der Flügel 310 der Figur 5b im wesentlichen die gesamte Querschnittsfläche verschließt, läßt der Flügel der Figur 5c einen Bereich frei und er deckt lediglich einen teil der Querschnittsfläche ab. Die Figur 5d zeigt einen Klappenflügel im Schnitt wobei zu erkennen ist, daß der Flügel 330 an einer Drehlagerung 331 aufgehängt ist.

## Patentansprüche

1. Klimagerät (10, 100), insbesondere für ein Kraftfahrzeug, mit einem Luftführungsgehäuse (12, 112) und darin angeordnetem Kühlwärmetauscher (18, 118) eines Kältemittelkreises zur Abkühlung von Luft, einem Heizkörper (20, 120) zur Erwärmung der Luft und mit Luftstromsteuerungsmitteln (28, 30, 34, 38, 128, 130, 134, 138), wobei an einer Luftanströmseite und/oder an einer Luftabströmseite des Heizkörpers ein Wärmeabschirmelement (44, 44a, 144, 300, 200) angeordnet ist, **dadurch gekennzeichnet, dass** das Wärmeabschirmelement (44, 44a, 144, 300, 200) zellenartig aufgebaut ist, wobei Zellwände (50) Durchströmungsöffnungen (52) einschließen.

2. Klimagerät nach Anspruch 1, **dadurch gekennzeichnet, dass** die Durchströmungsöffnungen (52) einen runden, eckigen oder sechseckigen Querschnitt aufweisen und zellenartig oder wabenartig ausgebildet sind.

3. Klimagerät nach einem der vorhergehenden Ansprüche 1 oder 2, **dadurch gekennzeichnet, dass** die Querschnittsflächen der Durchströmungsöffnungen (52) unterschiedlich ausgebildet sind.

4. Klimagerät nach einem der vorhergehenden Ansprüche 1 bis 3, **dadurch gekennzeichnet, dass** die Höhe (D) der Zellwände zwischen 6 und 15 mm beträgt.

5. Klimagerät nach einem der vorhergehenden Ansprüche, **dadurch gekennzeichnet, dass** das Wärmeabschirmelement (44, 44a, 144, 300, 200) die Luftanströmseite vollständig abdeckt.

6. Klimagerät nach einem der vorhergehenden Ansprüche, **dadurch gekennzeichnet, daß** das Wärmeabschirmelement (44, 44a, 144, 300, 200) an dem Heizkörper (20, 120) wieder lösbar, insbesondere anklippsbar, befestigt ist.

7. Wärmeabschirmelement (44, 44a, 144, 300, 200) insbesondere zur Anordnung auf der An- und/oder Abströmseite eines Wärmetauschers, wie Heizkörpers (20, 120), wobei das Abschirmelement (44, 44a, 144, 300, 200) zellenartig aufgebaut ist, wobei die einzelnen Zellen durch Zellwände (50) gebildet sind und einen Durchtritt für ein durchströmendes Medium bilden.

8. Wärmeabschirmelement nach Anspruch 7, **dadurch gekennzeichnet, daß** ein Rahmen (211, 221) und ein zentraler Zellenbereich vorgesehen ist, wobei der Rahmen den zentralen Zellenteil zumindest teilweise umfaßt.

9. Wärmeabschirmelement nach Anspruch 8, **dadurch gekennzeichnet, daß** der Rahmen (211, 221) und der Zellenbereich einstückig ausgebildet ist.

## Claims

1. Air conditioning unit (10, 100) for a motor vehicle, with an air duct housing (12, 112) accommodating a cooling heat exchanger (18, 118) of a refrigerant circuit for cooling the air, a heater (20, 120) for heating the air and airflow control means (28, 30, 34, 38, 128, 130, 134, 138), wherein a heat shield element (44, 44a, 144, 300, 200) is provided on an air approach side and/or an air exhaust side of the heater, **characterised in that** the heat shield element (44, 44a, 144, 300, 200) has a cell-type structure, the cell walls (50) enclosing through-flow openings (52).

2. Air conditioning unit according to claim 1, **characterised in that** the through-flow openings (52) have a circular, angular or hexagonal cross-section and are designed cell- or honeycomb-like.

3. Air conditioning unit according to claim 1 or 2, **characterised in that** the cross-sectional surfaces of the through-flow openings (52) are designed differently.

4. Air conditioning unit according to any of claims 1 to 3, **characterised in that** the height (D) of the cell walls is 6 mm to 15 mm.

5. Air conditioning unit according to any of the preceding claims, **characterised in that** the heat shield element (44, 44a, 144, 300, 200) completely covers the air approach side.

6. Air conditioning unit according to any of the preceding claims, **characterised in that** the heat shield element (44, 44a, 144, 300, 200) is detachably secured, in particular by means of clips, to the heater (20, 120).

7. Heat shield element (44, 44a, 144, 300, 200), in particular for locating on the approach and/or exhaust side of a heat exchanger such as a heater (20, 120), wherein the heat shield element (44, 44a, 144, 300, 200) has a cell-type structure, the individual cells being represented by cell walls (50) and forming a passage for a medium flowing through.

8. Heat shield element (44, 44a, 144, 300, 200) according to claim 7, **characterised in that** a frame (211, 221) and a central cell region are provided, the frame at least partially enclosing the central cell region.

9. Heat shield element (44, 44a, 144, 300, 200) according to claim 8, **characterised in that** the frame (211, 221) is integrated with the cell region.

## Revendications

1. Climatiseur (10, 100), en particulier pour véhicule automobile, avec un boîtier de guidage d'air (12, 112) et un échangeur thermique (18, 118), disposé à l'intérieur, d'un circuit frigorifique destiné à refroidir l'air, un corps chauffant (20, 120) destiné à chauffer l'air et avec des moyens de commande du flux d'air (28, 30, 34, 38, 128, 130, 134, 138), un bouclier thermique (44, 44a, 144, 300, 200) étant disposé d'un côté entrée d'air et/ou d'un côté sortie d'air du corps chauffant, **caractérisé en ce que** le bouclier thermique (44, 44a, 144, 300, 200) est construit de manière cellulaire, des parois cellulaires (50) comprenant des ouvertures d'écoulement (52).

2. Climatiseur selon la revendication 1, **caractérisé en ce que** les ouvertures d'écoulement (52) présentent une section transversale circulaire, angulaire ou hexagonale et sont réalisées de manière cellulaire ou en nid d'abeille.

3. Climatiseur selon l'une quelconque des revendications précédentes 1 ou 2, **caractérisé en ce que** les surfaces de section transversale des ouvertures d'écoulement (52) sont réalisées de manière différente.

4. Climatiseur selon l'une quelconque des revendications précédentes 1 à 3, **caractérisé en ce que** la hauteur (D) des parois cellulaires est comprise entre 6 et 15 mm.

5. Climatiseur selon l'une quelconque des revendications précédentes, **caractérisé en ce que** le bouclier thermique (44, 44a, 144, 300, 200) couvre entièrement le côté entrée d'air.

6. Climatiseur selon l'une quelconque des revendications précédentes, **caractérisé en ce que** le bouclier thermique (44, 44a, 144, 300, 200) est fixé sur le corps chauffant (20, 120) de manière amovible, en particulier enclipsable.

7. Bouclier thermique (44, 44a, 144, 300, 200) à agencer en particulier sur le côté entrée et/ou sortie d'un échangeur thermique, comme des corps chauffants (20, 120), le bouclier thermique (44, 44a, 144, 300, 200) étant construit de manière cellulaire, chaque cellule étant formée par des parois cellulaires (50) et formant un passage pour un milieu traversant.

8. Bouclier thermique selon la revendication 7, **caractérisé en ce qu'**un cadre (211, 221) et une zone cellulaire centrale sont prévus, le cadre entourant au moins partiellement la partie cellulaire centrale.

9. Bouclier thermique selon la revendication 8, **caractérisé en ce que** le cadre (211, 221) et la zone cellulaire sont réalisés d'un seul tenant.
